Europäisches Patentamt

**European Patent Office**

**Office européen des brevets**

(11) Veröffentlichungsnummer: **0 063 177**

**A1**

(12) **EUROPÄISCHE PATENTANMELDUNG**

(21) Anmeldenummer: **81109186.7**

(22) Anmeldetag: **29.10.81**

(51) Int. Cl.³: **B 65 F 3/22**
**B 60 K 41/16**

(30) Priorität: **16.04.81 DE 3115471**

(43) Veröffentlichungstag der Anmeldung:
**27.10.82 Patentblatt 82/43**

(84) Benannte Vertragsstaaten:
**AT BE CH FR GB IT LI LU NL SE**

(71) Anmelder: **GABLER GmbH & Co., KG.**
**Dorstener Strasse 59-61**
**D-4230 Wesel 13(DE)**

(72) Erfinder: **Nitz, Martin**
**Klammersheide 13**
**D-4230 Wesel 13(DE)**

(74) Vertreter: **Karstedt, Eberhard**
**Kappbergstrasse 31**
**D-8901 Stadtbergen(DE)**

(54) **Drehbehälter-Müllwagen.**

㊄ Bei einer Konstantmengenregelung für ein Getriebe mit hydrostatischem Antrieb (15, 16) wird ein elektro-hydraulischer Linearstellantrieb (5 als Servoverstellgerät für den Antriebs-Dieselmotor (13) und ein elektro-hydraulisches Servoverstellgerät (6) für die Verstellpumpe (15) vorgesehen, die von einer Mobil-Reglerkarte (1) gesteuert werden. Nach einer weiteren Maßnahme wird ein geschlossener hydraulischer Kreislauf (24) zwischen Konstant-Motor (16) und Verstellpumpe (15) ausgebildet.

EP 0 063 177 A1

- 1 -

Drehbehälter-Müllwagen

===========================================================

Die Erfindung betrifft einen Drehbehälter-Müllwagen nach Patent ........ (Patentanmeldung P 31 13 819. 5) wobei das Getriebe einen hydrostatischen Antrieb mit Konstantmengenregelung besitzt.

Nach dem Hauptpatent wird für den Antrieb eine in der Fördermenge entsprechend größere Verstellpumpe eingebaut, die von verschiedenen Gebern gesteuert wird, die bei unterschiedlicher Antriebsdrehzahl immer die Flüssigkeitsmenge liefert, die für die Betriebsdrehzahl des Behälters erforderlich ist. Bei einer derartigen Konstantmengenregelung wird entweder über die gewünschte Drehzahl des Behälters (Drehzahlregelung) oder über den Druck (Leistungsregelung) mit der Verstellung der Verstellpumpe gleichzeitig der Antriebsmotor in der Drehzahl verstellt.

- 2 -

Wenn der Behälter unbeladen ist, also zu Beginn der Beladung, genügt eine erhöhte Leerlaufzeit des Motors, um die Eigenreibung zu überwinden. Mit fortschreitender Beladung dreht der Motor schneller, um seinen Leistungs- oder Drehmoment zu erreichen, der gerade für die entsprechende Beladung erforderlich ist.

Bei der praktischen Durchführung hat es sich als zweckmäßig erwiesen, erfindungsgemäß einen elektro-hydraulischen-Linearstellantrieb als Servoverstellgerät für den Antrieb-Dieselmotor und ein elektro-hydraulisches-Servoverstellgerät für die Verstellpumpe vorzusehen, die von einer Mobil-Reglerkarte gesteuert werden.

Nach einer weiteren Ausgestaltung der Erfindung wird der Antrieb des Drehbehälters über ein von einem Konstant-motor betätigtes Getriebe vorgenommen, das von einem von der Reglerkarte beeinflußten Drehzahl-Induktivgeber steuerbar ist.

Es ist weiterhin zweckmäßig, einen Hinterachs-Überlaß-schalter als Impulsgeber für die Nutzlast in den Steuerkreis zu schalten.

Um eine einwandfreie Regelung zu ermöglichen und ein geringes Ansprech-Verzögerungsmoment zu erzielen, ist ein geschlossener hydraulischer Kreislauf zwischen Konstant-Motor und Verstellpumpe vorgesehen.

Durch die erfindungsgemäße Anordnung kann eine Kraftstofferparnis von mindestens 25 % erreicht werden,
wodurch der weitere Vorteil erreicht wird, eine
geringere gasförmige Emission durch die geringere
Motorbelastung zu erzielen und auch die Geräuschentwicklung herabzusetzen, was sich besonders bei der Müllentleerung in Kurorten oder reinen Wohngebieten vorteilhaft bemerkbar macht.

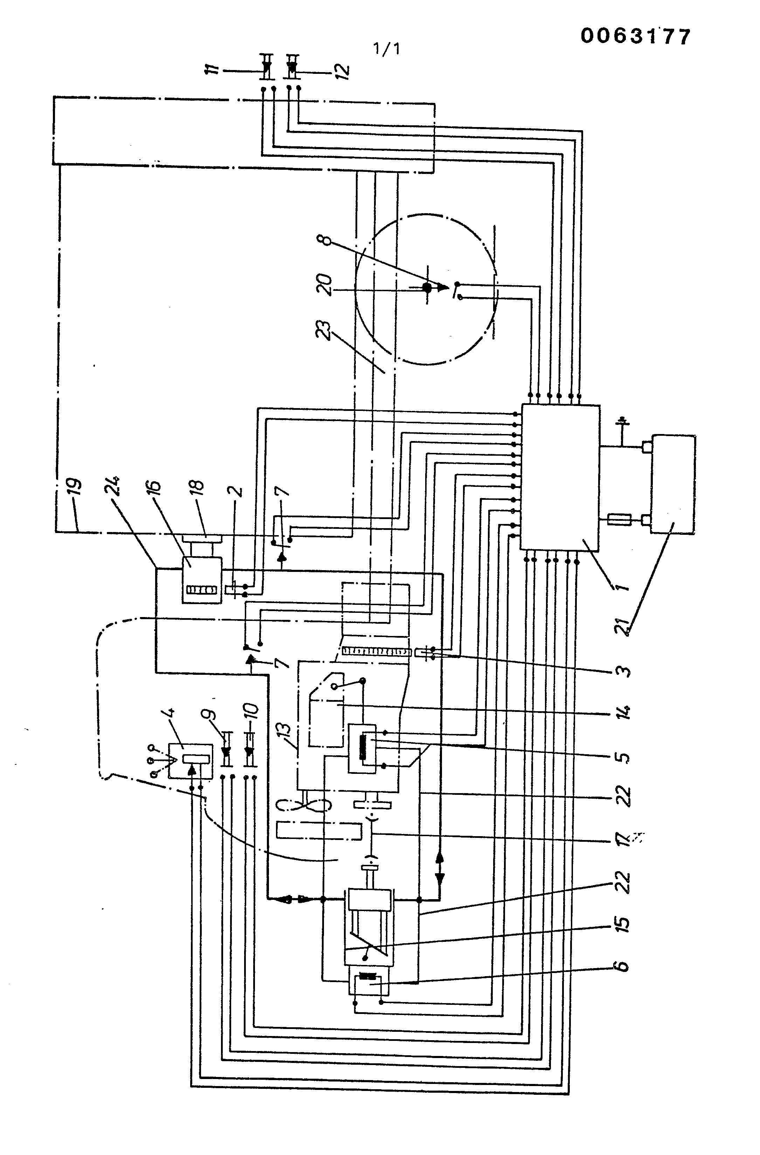

Ein Ausführungsbeispiel der Erfindung ist in der Zeichnung dargestellt und wird im folgenden näher beschrieben.

Ausgehend von einer Mobil-Reglerkarte 1 wird der Drehzahl-Induktivgeber 2 als Impulsgeber für die Behälterdrehzahl benutzt. Auch der Drehzahlinduktivgeber für
den Antriebsdieselmotor 3 wird, ebenso wie die Fernsteuereinheit 4 mit Vorwahl von der Reglerkarte 1 betätigt.

Der elektro-hydraulische-Linearstellantrieb 5 als Servoverstellgerät für den Dieselmotor 13 ist, ebenso wie
das elektro-hydraulische-Servosteuergerät 6 für die
Verstellpumpe in einem geschlossenen hydraulischen
Kreislaufsystem 24 angeordnet, in welchem auch der
Druckschalter 7 für beide Drehrichtungen liegt. Am
Hinterachs-Überlastschalter 8 dient als Impulsgeber
für die eingebrachte Nutzlast. Mit dem Ein- und Austaster 9 und dem Behälter-Rücklauf-Taster 10 sowie den
Behälter Ein-aus-Taster 11 sowie dem Not-aus-Taster 12
kann der Ablauf gesteuert werden. Die Einspritzpumpe 14 des Dieselmotors wird, wie erwähnt, von dem elektro-
hydraulischen Linear-Stellantrieb 5 gesteuert.

Die Verstellpumpe 15 wirkt auf den Konstant-Motor 16,
während der Antrieb 17 auf die Verstellpumpe 15 einwirkt.

Das Antriebsgetriebe 18 mit Konstantmotor ist am Drehbehälter 19 angeflanscht.

Die Hinterachse 20 des Fahrgestells bewirkt die Betätigung des Hinterachs-Überlastschalters 8. Die Stromversorgung erfolgt über eine Batterie 21. Das elektro-
hydraulische-Servosteuergerät 6 ist mit den Druckschalter 7 durch die Druckflüssigkeitsleitung 22
verbunden.

Das Führerhaus ist in Umrissen angedeutet, während das
Fahrgestell 23 mit dem Drehbehälter-Müllaufbau in
strichlierten Linien gezeichnet ist.

Die Arbeitsweise der Vorrichtung ist die folgende:

a. Der Drehzahlinduktivgeber (Impulsgeber) 2 meldet
   und steuert über die Reglerkarte 1 die Drehzahl
   des Behälters 19. Bei Drehzahlabfall (infolge erhöhten Leistungsverbrauchs) wird die erforderliche
   Leistung über den Dieselmotor 13 "nachgeschoben"
   oder aber bei plötzlichem Drehzahlabfall (Verstopfung)
   die Anlage ganz abgeschaltet.

b. Der Drehzahl-Induktivgeber (Impulsgeber) 3 meldet und steuert über die Reglerkarte 1 die Drehzahl des Dieselmotors 13. Bei Drehzahlabfall (infolge erhöhten Leistungsverbrauches) wird die Drehzahl des Motors 13 konstant gehalten oder bei Überdrehzahl ("durchgehen" des Motors bei z.B. Erreichen der Beladegrenze) die Drehzahl herabgesetzt.

c. Die Fernsteuereinheit 4 ermöglicht über die Reglerkarte 1 die Vorwahl der geforderten Funktion. Die einmal eingestellten Betriebsarten bleiben auch bei anderen Steuerungsmanipulationen immer erhalten: Rechtslauf oder Linkslauf des Behälters oder Fahrbetrieb (Stillstand des Behälters) ( +, 0, - )

d. Der elektro-hydraulische Linearstellantrieb ist ein von der eigenen (vorhandenen) Hydraulikanlage beaufschlagter Kraftantrieb, (über die Druckflüssigkeitsleitungen 22) der von der Reglerkarte 1 befehligt, mechanische Arbeit verrichtet. Hier Verstellen der Einspritzpumpe 14 des Dieselmotors 13 auf die gewünschte Drehzahl. (Frei von Schwingungen)

e. Der elektro-hydraulische Stellantrieb 6 ist ein von der eigenen (vorhandenen) Hydraulikanlage beaufschlagter Kraftantrieb (über die Druckflüssigkeitsleitungen 22), der von der Reglerkarte 1 gesteuert das Fördervolumen der Verstellpumpe 15 regelt.

f. Die Druckschalter 7 ermöglichen von beiden beaufschlagten Leitungen (beide Drehrichtungen) des geschlossenen Hydraulik-Kreislaufsystems 24 über die Reglerkarte 1 eine zusätzliche leistungsabhängige Regelung der gesamten Anlage.

g. Der (der Federcharakteristik nach einstellbare) Hinterachs-Überlastschalter (Impulsgeber) 8 schaltet schwingungsverzögert die gesamte Anlage beim Erreichen der zulässigen Nutzlast ab.

h. Der Ein-aus-Taster 9 schaltet die Anlage für Kurzzeitbetrieb (Fahrt von Eimerhaufen zu Eimerhaufen) für die über die Fernsteuereinheit 4 vorgewählte Betriebsart ein und aus.

i. Der Behälter-Rücklauf-Taster 10 ermöglicht über die Reglerkarte 1 ein (gewollt) begrenztes Rücklaufen (entgegen der Beladerichtung) des Behälters 19, um Sperrstücke, die wie unter der Funktion a. beschrieben, die Anlage abgeschaltet haben, wieder "zurückmüllen" zu können. (Ein beliebiges "Rückmüllen" ist gefährlich).

j. Der Ein-aus-Taster 11 hat, - an einer anderen Stelle angeordnet - über die Reglerkarte 1 die gleiche Aufgabe wie der Taster 9.

k. Der Not-aus-Taster 12 schaltet schlagartig über die Reglerkarte 1 bei Unfallgefahr die gesamte Anlage aus. Mit diesem Taster 12 darf bei Anlage _nur_ "Aus" geschaltet werden.

l. Die Mobil-Reglerkarte 1 und damit die gesamte Anlage wird von der Batterie 21 mit Strom versorgt. (In der Praxis $\pm$ 2,8 V bei 0,14 W).

Zusammenfassend ist festzustellen, daß mit der erfindungsgemäßen Einrichtung eine Fernsteuerung mit mehreren Befehlsstellen möglich ist. Bei der Sicherheitsschaltung stellen sich alle Hydraulik-Verbraucher auf Nullposition bei Stromausfall oder mechanischer Beschädigung von Stromzuführungen ein. Die erfindungsgemäß, auf die Kraftstoffersparnis beim Beladen eines Drehbehälter-Müllwagens besonders abgestimmte und hergestellte Mobil-Reglerkarte 1, auf der auf besonderer Steuerkennlinien für die Hydraulikanlage abgestellt ist, wird eine einfache Steuerung vieler Hydraulik-Aggregate eines Müllwagens möglich. Sie gipfelt in der Einhebel-Bedienung. Darüber hinaus stellt die erfindungsgemäße ausgestaltete Reglerkarte zusammen mit der erfindungsgemäßen Vorrichtung das Bindeglied zwischen groben elektrischen Schaltelementen, Mechanik und Elektronik dar. Schließlich ist die Vorrichtung Unfallsicher im praktischen Betrieb, weil das Bedienungspersonal keine zusätzlichen Überwachungsaufgaben wahrnehmen muß. Die Reglerkarte ist leicht herstell- und auswechselbar.

PATENTANSPRÜCHE :

==================================================================

1. Drehbehälter-Müllwagen nach Patent ........ (Patent-anmeldung P 31 13 819. 5 ), wobei das Getriebe einen hydrostatischen Antrieb mit Konstantmengenregelung besitzt, dadurch g e k e n n - z e i c h n e t , daß ein elektro-hydraulischer Linear-Stellantrieb (5) als Servoverstellgerät für den Antriebs-Dieselmotor (13) und ein elektro-hydraulisches-Servoverstellgerät (6) für die Verstellpumpe (15) vorgesehen sind, die von einer Mobil-Reglerkarte (1) gesteuert sind.

2. Drehbehälter-Müllwagen nach Anspruch 1, dadurch g e - k e n n z e i c h n e t , daß der Antrieb des Drehbehälters (19) über ein von einem Konstantmotor (16) betätigtes Getriebe (18) erfolgt, das von einem von der Reglerkarte (1) beeinflußten Drehzahl-Induktivgeber (2) steuerbar ist.

3. Drehbehälter-Müllwagen nach Anspruch 1 und/oder 2, da-durch g e k e n n z e i c h n e t , daß ein Hinter-achs-Überlastschalter (8) als Impulsgeber für die Nutzlast in den Steuerkreis geschaltet ist.

4. Drehbehälter-Müllwagen nach Anspruch 1 und/oder einem der folgenden, dadurch g e k e n n z e i c h -n e t , daß ein geschlossener hydraulischer Kreislauf (24) zwischen Konstantmotor (16) und Verstellpumpe (15) vorgesehen ist.

1/1

0063177

# EUROPÄISCHER RECHERCHENBERICHT

**0063177**

Nummer der Anmeldung

EP 81 10 9186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 541 679 (TALENTI) | | B 65 F 3/22 <br> B 60 K 41/16 |
| A | DE-A-2 949 337 (N.R.C.) | | |
| A | US-A-3 324 740 (LEWIS) | | |

RECHERCHIERTE SACHGEBIETE (Int. Cl. ³)

B 60 K 41/00
B 65 F 3/00

Der vorliegende Recherchenbericht wurde für alle Patentansprüche erstellt.

| Recherchenort <br> DEN HAAG | Abschlußdatum der Recherche <br> 12-07-1982 | Prüfer <br> FLORES E. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82